# EUROPÄISCHE PATENTANMELDUNG

(11) **EP 0 949 828 A2**
(43) Veröffentlichungstag der Anmeldung: **13.10.1999**
(21) Anmeldenummer: 99890098.9
(22) Anmeldetag: 23.03.1999
(51) Int. Cl.: H04Q 7/30

(54) **Digitale schnurlose Telefonanlage**

(30) Priorität: 07.04.1998 AT 60298
(71) Anmelder: Siemens Aktiengesellschaft Österreich, 1210 Wien (AT)
(72) Erfinder: Monika, Binder, 1130 Wien (AT); Forer, Josef, Dipl.-Ing., 1060 Wien (AT)
(74) Vertreter: Peham, Alois, Dipl.-Ing.

(57) **Zusammenfassung**

Es wird eine digitale schnurlose Telefonanlage angegeben, die eine Basisstation und Schnurlosendgeräte umfaßt, bei der die Basisstation eine direkte Verbindung zu einem Mobilfunknetz aufweist und bei der mittels Verfahren des Intelligent Networking die digitale schnurlose Telefonanlage und ein zusätzliches Mobilfunktelefon zu einer funktionellen Einheit geschaltet sind.

Damit können von Seiten des Netzbetreibers verschiedene Dienste angeboten werden. So ist es beispielsweise möglich, Gespräche zwischen Mobilfunkendgerät und Schnurlosapparaten - den Internverkehr - zu besonders günstigen Tarifen anzubieten

## Beschreibung

Die Erfindung betrifft eine digitale schnurlose Telefonanlage, die eine Basisstation und Schnurlosendgeräte umfaßt.

Telefonanlagen der genannten Art sind üblicherweise über eine Drahtverbindung mit einem öffentlichen leitungsgebundenen Kommunikationsnetz verbunden. Durch die zunehmende Bedeutung des Mobilfunks ist aber aus Kostengründen oftmals ein direkter Zugang zu einem oder mehreren Mobilfunknetzen wünschenswert. Dies deswegen, weil bei Gesprächen mit einem Mobilfunkteilnehmer beim Umweg über ein Festnetz durch die sogenannten Verbindungstarife höhere Gesprächsgebühren anfallen.

Es ist bekannt, Nebenstellenanlagen mit GSM-Adaptern auszustatten, die diesen direkten Zugang in ein GSM-Mobilunknetz ermöglichen. So werden von der Anmelderin unter der Produktbezeichnung GSM-Link A2000 Systemkomponenten angeboten, die einen oder mehrere Direktanschlüsse der Nebenstellenanlagen der HICOM-Familie an Mobilfunknetze ermöglichen.

Bei Anwahl eines Mobilfunkteilnehmers wird nun von der Nebenstellenanlage automatisch der Weg direkt in das betreffende Netz gewählt und somit gegenüber herkömmlichen Anlagen eine beträchtliche Kosteneinsparung erzielt.

Der Erfindung liegt nun die Aufgabe zugrunde, bei einer digitalen schnurlosen Telefonanlage das Zusammenwirken mit Mobilfunknetzen zu verbessern.

Diese geschieht erfindungsgemäß mit einer digitalen schnurlosen Telefonanlage, die eine Basisstation und Schnurlosendgeräte umfaßt, bei der die Basisstation eine direkte Verbindung zu einem Mobilfunknetz aufweist und bei der mittels Verfahren des "Intelligent Networking" die digitale schnurlose Telefonanlage und ein zusätzliches Mobilfunktelefon zu einer funktionellen Einheit geschaltet sind.

Der Begriff "Intelligent Networking" steht weltweit für das Konzept einer, für alle Telekommunikationsnetze gültigen Netzarchitektur. Dieses Konzept sieht zusätzliche Rechnerleistungen im Netz vor, mit der sich Verbindungen besonders flexibel steuern lassen. Eine Beschreibung von Intelligent Networking findet sich z.B. in "IN Intelligent Network; herausgegeben vom Geschäftsgebiet Öffentliche Vermittlungssysteme der Siemens Aktiengesellschaft; Bestell- Nr. A30930-N2050-P19-1-29".

Damit können von Seiten des Netzbetreibers verschiedene Dienste angeboten werden. So ist es beispielsweise möglich, Gespräche zwischen Mobilfunkendgerät und Schnurlosapparaten - den Internverkehr - zu besonders günstigen Tarifen anzubieten.

Günstig ist es, wenn die direkten Verbindungen zu einem Mobilfunknetz die selbe Telefonnummer aufweisen. Damit ist es beispielsweise möglich, Anrufe an das Mobilfunkgerät auch mit einem herkömmlichen Schnurlosendgerät entgegenzunehmen, wenn dies zweckmäßig ist. Dabei kann die Zusammenschaltung beispielsweise so erfolgen, daß bei einem entsprechenden Anruf zuerst das Mobilfunkendgerät läutet und, wenn innerhalb eines vorgegebenen Zeitraumes nicht abgehoben wird, die Verbindung an das oder die Schnurlostelefone weitergeschaltet wird. Die Zusammenschaltung kann aber auch so erfolgen, daß die Geräte gleichzeitig läuten und das Gespräch auf das Gerät durchgeschaltet wird, bei dem zuerst abgehoben wird.

Die Mobilfunknetzbetreiber bieten bereits die Möglichkeit, mittels sogenannten TWIN Cards zwei Mobiltelefone unter einer Nummer anzuwählen. Diese Möglichkeit kann daher auch bei der Erfindung vorteilhaft genutzt werden.

Die Erfindung ist besonders vorteilhaft einsetzbar, wenn die Telefonanlage dem DECT-Standard entspricht. Mit einer Telefonanlage nach dem DECT- Standard ( Digital European Cordless Telecommunications) kann beispielsweise auch das Last Mile-Problem im Ortsverkehr, d.h. die aufwendigen und teuren letzten Meter der Verbindungen zu den Telefonteilnehmern gelöst werden, indem eine DECT-Anlage zur Versorgung der Teilnehmer beispielsweise eines ganzen Gebäudes herangezogen wird. Die Verkabelung dieses Gebäudes entfällt dann.

Vorteilhaft ist auch eine Ausgestaltung der Erfindung in der Weise, daß die Basisstation eine Verbindung zu einem Festnetz aufweist, welche über ein TV-Kabelnetz geführt ist. Damit können die vielfach vorhandenen, mittels Koaxialleitern realisierten Kabelverbindungen der TV-Kabelgesellschaften genutzt werden.

Die Erfindung wird anhand einer Figur näher erläutert, welche beispielhaft eine erfindungsgemäße digitale schnurlose Telefonanlage zeigt.

Die dargestellte digitale schnurlose Telefonanlage (Heim- oder Nebenstellen-telefonanlage) umfaßt eine Basisstation BS mit einem Festnetzanschluß a/b , einem Mobilfunkanschluß, und einer Sende-Empfangseinrichtung DECT zur Verbindung mit einem oder mehreren Schnurlosendgeräten SLE. Mittels Methoden des Intelligent Networking sind die Nebenstellenanlage und ein zusätzliches Mobilfunktelefon zu einer funktionellen Einheit geschaltet.

Der Mobilfunkanschluß, der vorteilhafterweise mittels handelsüblichen GSM - Modulen (GSM-Engines) realisiert wird, weist unter anderem eine Antenne GSM und eine Vorrichtung zur Aufnahme einer SIM-Telefonkarte (SIM = Subscriber Identity Module) d.h. einer Berechtigungskarte auf.

Auf dieser Berechtigungskarte ist bekanntlich die individuelle Kennung eines Mobilfunkteilnehmers enthalten, mit der dieser jedes Mobilfunkgerät zu seinem Gerät erklären kann.

Ist nun dieses Gerät eingeschaltet und hebt der Teilnehmer den Hörer ab - bei aktuellen Geräten durch Tastendruck - so wird seine Kennung zur nächstgelegenen Mobilfunkvermittlung übertragen, die in den Begriffen des Intelligent Networking als Service Switching Point dient, über den die Einbindung des Mobilfunksystemes in ein Basisnetz mit dessen vermittlungstechnischen Bedingungen erfolgt.

Die Mobilfunkvermittlung fragt ihre lokale Besucherdatei (Visitor Location Register) ab, ob der rufende Teilnehmer bereits registriert ist. Sind seine Daten bereits gespeichert - was im Falle eines ortsfesten Mobilfunkanschlußes der Fall sein wird - beginnt der Verbindungsaufbau sofort. Im anderen Fall werden über Verbindungen mit dem Zeichengabesystem Nr. 7 die Heimatdatei des Teilnehmers ermittelt und daraufhin die Daten der Berechtigungskarte sowie das Gerätekennzeichen mit den gespeicherten Angaben verglichen. So werden beispielsweise aufgrund einer Diebstahlsanzeige gesperrte Geräte von der Teilnahme ausgeschlossen. Über diese Stammdaten des Mobilfunkteilnehmers wird auch die funktionelle Zusammenschaltung zwischen der schnurlosen Telefonanlage mit GSM-Anschluß in der Basisstation und dem zusätzlichen Mobilfunktelefon zu einer funktionellen Einheit erfolgen. Dies kann beispielsweise mittels sogenannten TWIN-Cards erfolgen, das sind Berechtigungskarten mit übereinstimmender Kennung, deren Verwendung dazu führt, daß die damit bestückten Endgeräte, im vorliegenden Fall ein Mobilfunkendgerät und die Basisstation eines Schnurlostelefones vom Vermittlungssystem gleichzeitig angesprochen werden.

Alternativ zur Lösung mittels TWIN-Cards und einer einzelnen Telefonnummer ist aber auch eine Lösung mit zwei unterschiedlichen Telefonnummern für die Basisstation und das zusätzliche Mobilfunktelefon möglich, wobei mittels Intelligent Networking für Gespräche zwischen beiden Teilnehmern ein günstiger Gebührentarif (Partnertarif) verrechnet werden kann und eine gemeinsame Verrechnung für alle Gebühren erfolgen kann.

Zum Schnurlostelefon ist anzumerken, daß es sich beim Ausführungsbeispiel um ein Telefon nach dem sogenannten DECT-Standard handelt. DECT steht für Digital European Cordless Telecommunication, das ist seit 1992 der digitale Standard für kabellose digitale Telekommunikationsendgeräte. Der Standard wurde von ETSI (European Telecommunications Standards Institute) unter Beteiligung der Postorganisationen und der Telekommunikationsindustrie ausgearbeitet. Das DECT-Konzept wird z.B. in ntz Bd. 43 (1990) Heft 4; Seite 214 - 217 beschrieben.

Das Mobiltelefon basiert auf dem GSM 900 Standard, die Erfindung kann aber ohne Einschränkungen auch bei Mobilfunksystemen nach anderen Standards, wie GSM 1800 oder UMTS eingesetzt werden.

Als eine weitere Option besteht die Möglichkeit, das die Basisstation des Schnurlostelefones in eine sogenannte Settop-Box eingebaut ist, welche Telefongespräche über TV-Kabelnetze ermöglicht.

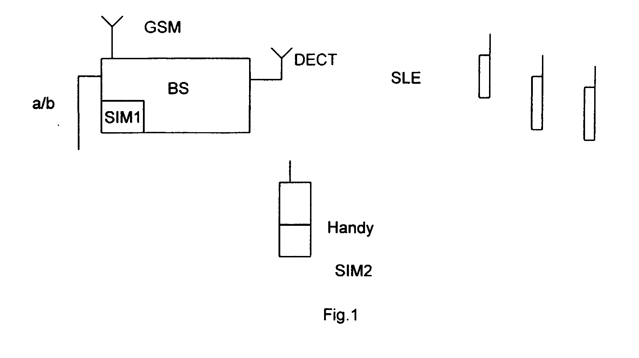

## Patentansprüche

1. Digitale schnurlose Telefonanlage, die eine Basisstation und Schnurlosendgeräte umfaßt, **dadurch gekennzeichnet**, daß die Basisstation eine direkte Verbindung zu einem Mobilfunknetz aufweist und daß mittels Verfahren des Intelligent Networking die digitale schnurlose Telefonanlage und ein zusätzliches Mobilfunktelefon zu einer funktionellen Einheit geschaltet sind.

2. Telefonanlage nach Anspruch 1, **dadurch gekennzeichnet**, daß die direkten Verbindungen der Basisstation und des Mobilfunktelefones zu einem Mobilfunknetz die selbe Telefonnummer aufweisen.

3. Telefonanlage nach Anspruch 2, **dadurch gekennzeichnet**, daß die direkten Verbindungen zu einem Mobilfunknetz mittels TWIN Cards verwirklicht sind.

4. Telefonanlage nach einem der Ansprüche 1 bis 3, **dadurch gekennzeichnet**, daß die Kommunikation zwischen Basisstation und Schnurlosendgeräten nach dem DECT-Standard erfolgt.

5. Telefonanlage nach einem der Ansprüche 1 bis 4, **dadurch gekennzeichnet**, daß die Basisstation eine Verbindung zu einem Festnetz aufweist, welche über ein TV-Kabelnetz geführt ist.
